Europäisches Patentamt

European Patent Office

Office européen des brevets

(11) Publication number: **0 207 974 B1**

# EUROPEAN PATENT SPECIFICATION

(45) Date of publication of the patent specification: 27.09.89

(51) Int. Cl.⁴: **F 16 K 11/00, F 16 K 11/14**

(21) Application number: **86900641.1**

(22) Date of filing: **03.01.86**

(86) International application number: **PCT/SE 86/00002**

(87) International publication number: **WO 86/04129 (17.07.86 Gazette 86/17)**

(54) **VALVE DEVICE.**

(30) Priority: **04.01.85 SE 8500032**

(43) Date of publication of application: **14.01.87 Bulletin 87/3**

(45) Publication of the grant of the patent: **27.09.89 Bulletin 89/39**

(84) Designated Contracting States: **DE GB**

(56) References cited:
**FR-A- 2 057 131**
**GB-A- 1 144 047**
**NO-B- 123 487**

**Derwent's abstract No. N 5032 E/41, SU 885-672**

(73) Proprietor: **PREMA AB, Box 249, S-391 23 Kalmar (SE)**

(72) Inventor: **ELM, Alf, Sparregatan 19, S-392 30 Kalmar (SE)**

(74) Representative: **Nydell, Peder, Nydells Patentbyra Storgatan 57, S-392 31 Kalmar (SE)**

ACTORUM AG

## Description

The present invention relates to a valve device, including a valve casing having at least three ports, two of which being angularly oriented relative to one another and each one having an individual valve, one of the valves being held in its open position when the other valve is held in its closed position, and vice versa. The invention relates particularly, but not exclusively, to a valve device for regulating and distributing fluid streams from two ports to a third port, or alternatively from one port to two other ports. Such valve devices are often being used as so called shunt valves in hot water systems.

The valves of the known valve devices are often designed as rotary valves, and usually as so called plane rotary valves, where the fluid flow is regulated by means of a plane disc having an aperture or a recess and being rotatably mounted relative to an opening in the casing. When using this type of valve, the operation of which is performed by rotation of an operative shaft or spindle it is difficult to achieve an adequate sealing of the inlet and outlet of the valve. In order to improve the sealing, the valve is usually mounted in a manner where the plane disc is urged against the valve casing by means of a compression spring.

When making greater demands upon the sealing efficiency, seat valves or ball valves (see for instance GB-A-1 144 047 and FR-A-2 057 131) are instead used, the seat valves often being in the shape of wedge-gate valves. These wedge-gate valves have an axially displacable wedge member having a conical abutment surface being designed to seal against a mating conical seat in the valve casing. The wedge member can be operated either by an axially displacable operative spindle or by a rotatable operative spindle, the rotary movement of which is being transformed into an axial displacement of the wedge member.

Although the wedge-gate valve has often a better sealing function than the plane rotary valve, the cost of manufacture is higher, which makes the valve device more expensive.

Therefore, the more expensive wedge-gate valve has hitherto been used only where there is a greater demand for a high sealing efficiency, whereas the cheaper plane rotary vlaves have been used where the demand for sealing efficiency is somewhat less.

However, in some valve systems the demand for sealing efficiency is different for the various valves of the valve system. Economically it has therefore been a strong need to use a combination of a wedge-gate valve and a plane rotary valve, such that the expensive wedge-gate valve is used at the port of the valve system where there is the greatest demand for sealing efficiency. However, it has not hitherto been proposed any control means capable of the combined and simultaneous operation of a plane rotary and a wedge-gate valve.

The object of the present invention is, therefore, to provide a valve device of the aforementioned kind which enables the use of two different valves, each of which having an individual sealing efficiency adapted to its respective demand. This object is achieved by a valve device in accordance with the invention having the characterizing features set forth in Claim 1.

The cheaper type of valve, i.e. the plane rotary valve, can, in accordance with the invention, be used in a port having a reduced sealing requirement, for instance in the case where it comes to return water from a radiator or the like, whereas the more expensive valve, i.e. the wedge-gate valve, can be used in a port having a greater demand upon the sealing efficiency, for instance in the case where it becomes to conveying water from a heating device. In accordance with the invention the two valves are controllable simultaneously by means of a common operative spindle capable of rotating the plane rotary valve and affect the wedge-gate valve axially as well, for instance via an eccentric.

According to a further embodiment of the invention a soft sealing means is mounted in the wedge-gate valve between the valve wedge member and the seat, the operative spindle being capable of displacing the valve wedge member from a closed to an open position against the action of the pressure prevailing outside the port, and against the action of a spring. This means that the soft sealing means will, in the closed position of the valve, be compressed, i.e. seal better at higher pressure from the fluid outside the port.

Further developments of the invention are set forth in the dependent Claims.

The invention will be described below in more detail with reference to the accompanying drawing which illustrates a preferred embodiment of the invention.

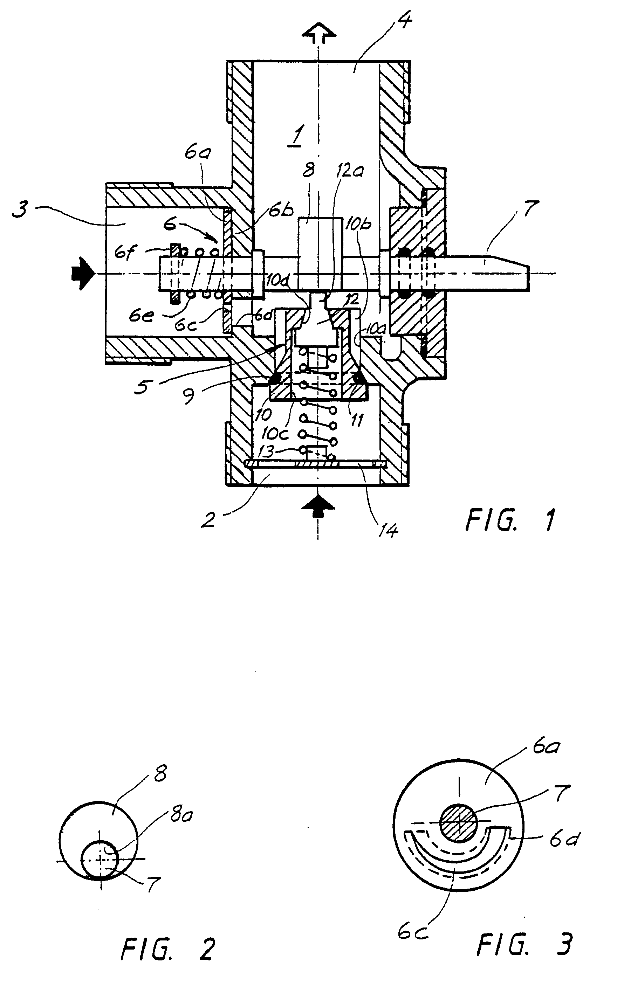

Fig. 1 is a cross-sectional view of a valve device according to the invention and designed for mixing a return water from a heater, for instance a radiator, and feedwater from a heater device. Fig. 2 is a plane view of an eccentric incorporated in the valve device of fig. 1. Fig. 3 is a plane view of a plane slide incorporated in the valve device of fig. 1.

The valve device includes a casing 1 with three ports 2, 3 and 4, the centre axises of which are oriented in a common plane, but which in said order are displaced 90 degrees relative to one another.

The port 2 is an inlet port, and is designed to be supplied with feed-water from a heating device, not shown. The port 3 is a shunt port, and is designed to be supplied with return water from a heating device, for instance a radiator. The port 4 is always open, and designed to supply water to an inlet conduit (not shown) for the heating device.

The ports 2 and 3 are provided with a wedge-gate valve 5 and a plane rotary valve 6, respectively, the two valves being simultaneously controllable by a common rotary operative spindle 7 being oriented coaxially with the port 3. The operative spindle 7 is arranged to be driven by a drive motor, not shown, which preferably is controlled in a way known per se, by one or more conventional thermal transducers (not shown). The operative spindle 7 is rigidly connected to the valve member of the valve 6 which has the shape of a circular plane disc 6a which abuts against a seat 6b in the port 3. The disc 6a has a semicircular aperture 6c, which is tapered in one direction (see fig. 3), and which, as a result of the rotation of the operative spindle 7, varies its open area relative to a semicircular slot 6d of uniform width provided in the seat 6b. The disc 6a is held compressed against the seat 6b by means of a spring 6e arranged around the spindle 7, the spring 6e being compressed between the disc 6a and ring member 6f which is ridigly connected to the spindle 7.

A cam in the form of a circular disc 8 is, via an eccentric bore 8a, threaded on to the spindle 7 within the casing 1 flush with the port 2 and is rigidly connected to the spindle 7. The disc 8 thereby forms an eccentric (see fig.2), by the aid of which the operative spindle 7 can transmit its rotary movement to an axial force on the wedge-gate valve 5.

The valve 5 is provided with a seat 9 which widens conically towards the exterior of the port, a correspondingly conically shaped valve member in the shape of a wedge member 10 being designed to sealingly abut against the seat 9 via a soft sealing means in the shape of an O-ring 11 being arranged in a groove of the wedge member. The wedge member 10 is thereby dimensioned to abut the seat 9 before the O-ring 11 will be entirely compressed, thus increasing the life time thereof.

The wedge member 10 is axially displacable in a guide means 10a in the port 2, the periphery of the wedge member having a number of axial recesses 10b facing the guide means 10a and forming the actual fluid passages of the valve 5.

The wedge member 10 has an axial centre channel 10c having a second seat 10d which widens conically towards the exterior of the port 2, a correspondingly conically shaped release wedge member 12 being arranged to abut against said second seat by means of a compression spring 13. This is compressed between the release wedge member 12 and a spoke wheel ring 14 which is radially mounted in the wall of the port 2. In order to retain the spring 13, this is arranged around a pin protruding from the release wedge member 12 and also arranged around a pin protruding from the ring 14.

The release wedge member 12 has an operative pin 12a in its end portion that faces the valve casing 1, the pin being urged against the eccentric disc 8 by the spring 13.

The valve device operates as follows:

In the position shown in Figs. 1-3 the valve 5 is completely closed, whereas the valve 6 is completely open. Upon rotation of the operative spindle 7, the eccentric disc 8 will against the action of the spring 13, displace the release wedge member 12 downwards, the valve 5 thereby partially opening such that a certain amount of fluid can drop past between the release wedge member 12 and the seat 10d. The release wedge member 12 thus serves as a pressure release for the wedge member 10 and as a control member as well, in the opening phase of the valve.

When the pin 12a is entirely displaced downwards in the wedge member 10, the valve wedge member 10 and the release wedge member 12 as well, will be displaced downwards by the eccentric disc 8, such that the valve 5 will be further opened, causing fluid to stream also through the channels 10b. The more the inlet port 2 will open, the more the shunt port 3 will close by means of the plane disc 6a, the outlet 6c of which will reduce its opening area against the seat 6b. Upon a rotary movement of 180 degrees from the starting position, the eccentric 8 has displaced the wedge members 10 and 12 to a maximum, i.e. the valve 5 is entirely open. Simultaneously, the outlet 6c of the plane disc 6a will be entirely closed against the seat 6b.

Thanks to the described arrangement of the two wedge members 10 and 12, the valve 5 can be made entirely free of leakage in its closed position without any need of cost consuming precision work having to be done.

The valve casing 1 may be manufactured of any suitable cast-metal, for instance red casting, whereas the valve bodies suitable are made of acid resistant stainless steel. The release wedge member may alternatively be made of a plastic or the like.

The capacity value (cvs-value) may be varied by adjustment of a maximal rotary angle of the operative spindle.

In the embodiment shown, the inlet port 2 and the shunt port 3 form a 90 degrees angle with one another. According to an alternative embodiment the ports may form a different angle relative to one another, for instance by inclining the disc correspondingly against the spindle 7.

## Claims

1. A valve device including a valve casing (1) having at least three ports (2, 3, 4), two of which (2, 3) being angularly oriented relative one another, and each one having an individual valve (5, 6), one of the valves (5) being held in its open position when the other valve (6) is held in its closed position, and vice versa, the two valves being simultaneously controllable by means of a common operative spindle (7), characterized in that one of the valves (6) is a plane rotary valve, and that the other valve (5) is a wedge-gate valve (1), in that the spindle is operatively direct-connected to the plane rotary valve (6) for rotating the plane rotary valve, and in that the spindle is operatively indirect-connected, via an eccentric (8), to the wedge-gate valve (5) for affecting the wedge-gate valve axially.

2. A valve device according to Claim 1, caracterized in that the wedge-gate valve (5) has a seat (9) and a valve wedge-member (10) capable of sealingly abut against the seat by the action of a spring (13) and via a soft sealing means (11) arranged between the seat and the valve body, the valve body being capable of being displaced from a closed to an open position by means of a rotation of the operative spindle against the action of the pressure prevailing outside the respective port (2) and against the action of the spring (13).

3. A valve device according to Claim 2, characterized by a release wedge member (12) between the spring (13) and the valve wedge member (10), the operative spindle being capable of, during a first phase of its rotation, displacing the release wedge member against the action of the spring such that the wedge-gate valve (5) will partially open, and during a second phase of its rotation, displacing the release wedge member (12) and the valve wedge member (10) as well against the action of the spring in order to further open the wedge-gate valve.

4. A valve device according to any one of the preceding Claims, characterized in that it is arranged to regulate the mixing proportion between hot and cold water, the wedge-gate valve (5) being arranged to control the feed of hot water to the valve casing, and the plane rotary valve (6) being arranged to regulate the delivery of cold water to the valve casing.

5. A valve device according to any one of the preceding Claims, characterized in that a longitudinal cross-section (Figure 1) of the spindle (7) is oriented in a common plane with a longitudinal cross-section of the port (3) that houses the plane rotary valve (6).

**Patentansprüche**

1. Ventilelement, das ein Ventilgehäuse (1) beinhaltet, welches wenigstens drei Öffnungen (2, 3, 4) hat, von denen zwei (2, 3) winklig relativ zueinander ausgerichtet sind und jede ein einzelnes Ventil (5, 6) hat, wobei eines der Ventile (5) in seiner geöffneten Position gehalten wird, wenn das andere Ventil (6) in seiner geschlossenen Position gehalten wird, und umgekehrt, und wobei die zwei Ventile gleichzeitig mittels einer gemeinsamen operativen Welle (7) steuerbar sind, dadurch gekennzeichnet, daß eines der Ventile (6) ein ebenflächiger Drehschieber ist, und daß das andere Ventil (5) ein Keilschieber ist, daß die Welle mit dem ebenflächigen Drehschieber (6) betriebsmäßig direkt verbunden ist zum Drehen des ebenflächigen Drehschiebers, und daß die Welle betriebsmäßig indirekt wirksam, über einen Excenter (8), mit dem Keilschieber (5) verbunden ist, um auf den Keilschieber axial einzuwirken.

2. Ventilelement nach Anspruch 1, dadurch gekennzeichnet, daß der Keilschieber (5) einen Sitz (9) hat und ein Ventilkeilbauelement (10), welches auf dem Sitz abdichtend abstützbar ist durch die Wirkung einer Feder (13) und über eine weiche Abdichtungseinrichtung (11), die zwischen dem Sitz und dem Ventilgehäuse angeordnet ist, wobei das Ventilgehäuse von einer geschlossenen in eine geöffnete Stellung verschiebbar ist mittels einer Drehung der operativen Welle gegen die Wirkung des Druckes, der außerhalb der entsprechenden Öffnung (2) vorherrscht, und gegen die Wirkung der Feder (13).

3. Ventilelement nach Anspruch 2, gekennzeichnet durch ein Lösekeilbauelement (12) zwischen der Feder (13) und dem Ventilkeilbauelement (10), wobei die operative Welle geeignet ist, während einer ersten Phase ihrer Drehung das Lösekeilbauelement gegen die Wirkung der Feder zu verschieben, derart, daß der Keilschieber (5) teilweise geöffnet wird, und, während einer zweiten Phase ihrer Drehung das Lösekeilbauelement (12), als auch das Ventilkeilbauelement gegen die Wirkung der Feder zu verschieben, um den Keilschieber weiter zu öffnen.

4. Ventilbauelement nach einem der vorhergehenden Ansprüche, dadurch gekennzeichnet, daß es eingerichtet ist, um das Mischverhältnis zwischen heißem und kaltem Wasser zu regulieren, wobei der Keilschieber (5) derart eingerichtet ist, um die Zufuhr von heißen Wasser zum Ventilgehäuse zu steuern und daß der ebenflächige Drehschieber (6) derart eingerichtet ist, um den Ausfluß von kaltem Wasser zum Ventilgehäuse zu regulieren.

5. Ventilelement nach einem der vorhergehenden Ansprüche, dadurch gekennzeichnet, daß ein Längsquerschnitt (Figur 1) der Welle (7) in einer gemeinsamen Ebene mit einem Längsquerschnitt der Öffnung (3), die den ebenflächigen Drehschieber (6) aufnimmt, ausgerichtet ist.

**Revendications**

1. Dispositif de soupape comprenant un carter de soupape (1) muni d'au moins trois orifices (2, 3, 4) dont deux (2, 3) sont orientés angulairement l'une par rapport à l'autre et comportent chacun une soupape individuelle (5, 6), l'une des soupape (5) étant maintenue dans sa position d'ouverture, lorsque l'autre soupape (6) est maintenue dans sa position de fermeture, et vice versa, les deux soupapes étant commandables simultanément au moyen d'une broche de manoeuvre commune (7), dispositif caractérisé en de que l'une des soupapes (6) est une soupape plane rotative, en ce que l'autre soupape (5) est une soupape à fermeture en cône, en ce que la broche est reliée directement en fonctionnement à la soupape plane rotative (6) pour faire tourner cette soupape plane rotative, et en ce que la broche est reliée indirectement en fonctionnement, par l'intermédiaire d'une excentrique (8), à la soupape à fermeture en cône (5) pour modifier axialement la position de cette soupape de fermeture à élément en forme de coin.

2. Dispositif de soupape selon la revendication 1, caractérisé en ce que la soupape à fermeture en cône (5) comporte un siège (9) et un élément de soupape en forme de cône (10) pouvant venir buter de manière étanche contre le siège sous l'action d'un ressort (13) et par l'intermédiaire d'un moyen d'étanchéité souple (11) disposé entre le siège et le corps de soupape, ce corps de soupape pouvant être déplacé d'une position de fermeture à une position d'ouverture, grâce à une rotation de la broche de manoeuvre contre l'action de la pression régnant à l'extérieur de l'orifice correspondant (2) et contre l'action du ressort (13).

3. Dispositif de soupape selon la revendication 2, caractérisé en ce qu'il comprend un élément de libération du cône (12) entre le ressort (13) et l'élément de soupape en forme de cône (10), la broche de manoeuvre étant capable, pendant une première phase de sa rotation, de déplacer l'élément de libération du cône contre l'action du ressort, de façon que la soupape de fermeture à élément en forme de cône (5) soit partiellement ouverte, et pendant une seconde phase de sa rotation, de déplacer l'élément de libération de cône (12) et l'élément de soupape en forme de cône (10) également contre l'action du ressort pour ouvrir encore plus grand la soupape de fermeture à l'élément en forme de cône.

4. Dispositif de soupape selon l'une quelconque des revendications précédentes, caractérisé en ce qu'il est conçu pour réguler la proportion de mélange entre de l'eau chaude et de l'eau froide, la soupape de fermeture à élément en forme de cône (5) étant destinée à commander la fourniture d'eau chaude au carter de soupape, et la soupape rotative plane (6) étant destinée à réguler la fourniture d'eau froide au carter de soupape.

5. Dispositif de soupape selon l'une quelconque des revendications précédentes, caractérisé en ce qu'une coupe longitudinale (figure 1) de la broche (7) est orientée dans un plan commun avec une coupe longitudinale de l'orifice (3) logeant la soupape rotative plane (6).

FIG. 1

FIG. 2

FIG. 3